# EUROPÄISCHE PATENTSCHRIFT

(11) **EP 3 035 514 B1**
(45) Veröffentlichungstag und Bekanntmachung des Hinweises auf die Patenterteilung: **06.06.2018**
(21) Anmeldenummer: 14199342.8
(22) Anmeldetag: 19.12.2014
(51) Int. Cl.: H02M 1/36, H02H 9/00

(54) **Vorladevorrichtung eines Stromrichters**
Pre-charging device of a power converter
Dispositif de préchargement d'un convertisseur

(43) Veröffentlichungstag der Anmeldung: 22.06.2016
(73) Patentinhaber: Siemens Aktiengesellschaft, 80333 München (DE)
(72) Erfinder: Heuer, Jörg Christian, 45130 Essen (DE)

(56) Entgegenhaltungen:
- DE-A1-102009 037 723
- DE-U1- 9 216 662
- JP-A- S 637 101
- KR-A- 20130 072 951

## Beschreibung

Die Erfindung betrifft eine Vorladevorrichtung für einen Stromrichter. Die Erfindung betrifft weiter ein Stromrichtersystem aufweisend einen Stromrichter und eine Vorladevorrichtung sowie ein Verfahren zum Vorladen eines Stromrichters.

Stromrichter werden eingesetzt, um elektrische Maschinen, insbesondere Motoren, oder elektrische Netze mit elektrischer Energie zu versorgen. Mit Hilfe des Stromrichters lässt sich die Maschine steuern und regeln. Darüber hinaus kommen Stromrichter für die verlustarme Übertragung von Energie mittels Hochspannungsgleichstromübertragung (HGÜ) zur Anwendung. Ein weiteres Anwendungsgebiet für Stromrichter stellen Kompensatoren dar. Mit ihnen lassen sich Blindleistungen und/oder Stromoberschwingungen kompensieren, d.h. beseitigen, oder gezielt in ein Netz einspeisen.

Die Aufgabe des Stromrichters ist es dabei, elektrische Leistung bezüglich ihrer Spannungshöhe, Stromhöhe, Frequenz und Phasenlage umzuwandeln.

Um einen Stromrichter mit einer Zwischenkreiskapazität mit einem Energieversorgungsnetz, insbesondere mit einem Drehstromnetz oder Wechselspannungsnetz, zu verbinden, müssen Maßnahmen getroffen werden, um eine Belastung des Netzes durch einen hohen Netzstrom beim Einschalten zu vermeiden. Dazu werden Vorladeschaltungen verwendet, wie z.B. in den Druckschriften DE9216662U, KR20130072951 und DE102009037723 beschrieben, bei denen die Zwischenkreiskapazität über Widerstände aus dem Energieversorgungsnetz aufgeladen werden. Erst wenn die Spannung der Zwischenkreiskapazität einen bestimmten Wert erreicht hat, wird der Stromrichter direkt mit dem Energieversorgungsnetz verbunden.

Für die Vorladeschaltungen werden üblicherweise drei parallele Widerstände verwendet über die die Zwischenkreiskapazität des Stromrichters aufgeladen wird. Dieses Aufladen wird auch als Vorladen bezeichnet. Dabei werden die wechselseitigen Anschlüsse des Stromrichters über die Widerstände mit dem Energieversorgungsnetz verbunden. Wenn die Vorladung abgeschlossen ist, werden die Widerstände jeweils mittels eines Schalters kurzgeschlossen, so dass der Stromrichter ohne elektrische Verluste an den Widerständen Energie mit Energieversorgungsnetz austauschen kann.

Im Zusammenhang mit einer Beschaltung des Stromrichters, beispielsweise mit einem Netzfilter, kann sich der Vorladevorgang verlängern. Dabei werden die Widerstände stärker erwärmt, was eine größere Dimensionierung der Komponenten der Vorladeschaltung erfordert. Je nach Dimensionierung der Bauteile des Netzfilters und der Vorladeschaltung kann es vorkommen, dass die Mindestspannung des Zwischenkreiskondensators, die zum Verbinden mit dem elektrischen Energieversorgungsnetz benötigt wird, nicht erreicht wird. Die Druckschrift JPS637101, die als nächstliegender Stand der Technik angesehen wird, schlägt zum Schutz gegen Überströme vor, einen Thyristor und eine Diode parallel zum Vorladewiderstand zu schalten.

Der Erfindung liegt die Aufgabe zugrunde, eine Vorladevorrichtung anzugeben, mit der die Vorladung eines Stromrichters schnell und verlustarm durchgeführt werden kann.

Diese Aufgabe wird durch die Merkmale des VorrichtungsAnspruchs 1 und des Verfahrens-Anspruchs 8 gelöst. Vorteilhafte Ausgestaltungen der Erfindung sind in den abhängigen Ansprüchen angegeben.

Der Erfindung liegt die Erkenntnis zugrunde, dass sich die Dauer der Vorladung dadurch reduzieren lässt, dass in den Strompfad zur Vorladung des Zwischenkreiskondensators des Stromrichters ein Leistungshalbleiter, wie beispielweise eine Diode oder ein Thyristor, eingefügt wird. Erfindungsgemäß wird der Leistungshalbleiter zusammen mit einem Widerstand zur Begrenzung des Stromes in der Vorladevorrichtung angeordnet. Bei dem Widerstand kann es sich auch um eine Reihenschaltung einzelner Widerstände handeln. Der Leistungshalbleiter bewirkt, dass der Kondensator oder die Kondensatoren eines am Stromrichter vorhandenen Netzfilters nicht mehr umgeladen werden, da durch den Leistungshalbleiter in einer Phase nur ein Stromfluss zwischen Wechselspannungsnetz und Stromrichter in einer Richtung erfolgt. Bei dem Wechselspannungsnetz kann es sich beispielsweise um ein dreiphasiges Drehstromnetz oder um ein einphasiges Wechselstromnetz handeln. Damit wird ein Umladestrom, der für die Umladung des Kondensators des Netzfilters bei Anwendungen aus dem Stand der Technik verantwortlich war, vermieden. Dadurch können Verluste bei der Vorladung verringert werden, da der Umladestrom bei der Verwendung einer erfindungsgemäßen Vorladevorrichtung nicht mehr vorhanden ist oder zumindest reduziert werde kann. Je nach Dimensionierung von Netzfilter und Vorladewiderstand kann bei einer Stromrichteranordnung aus dem Stand der Technik der Umladestrom derart hohe Werte annehmen, dass der Zwischenkreiskondensator des Stromrichters sich nicht auf eine bestimmte Spannung vorladen ließ. Durch das Einfügen des Leistungshalbleiters in den Strompfad zur Vorladung wird der Kondensator oder die Kondensatoren des Netzfilters, zumindest jedoch ein Teil dieser Kondensatoren, nicht mehr umgeladen. Es wird bei der Phase des Wechselspannungsnetzes, die mit dem Leistungshalbleiter der Vorladevorrichtung verbunden ist, nur eine Polarität der entsprechenden Netzspannung genutzt. Da die Aufladung des Zwischenkreiskondensators des Stromrichters über die gleichen Ventile des Stromrichters erfolgt, befindet sich der Kondensator des Netzfilters, der mit den an der Vorladung beteiligten Phasen verbunden ist, elektrisch parallel zum Zwischenkreiskondensator. Die Vorladevorrichtung kann sowohl für dreiphasige als auch für einphasige (mit vorhandenem N-Leiter) Stromrichter zur Vorladung verwendet werden. Dabei kann die Vorladevorrichtung eine, zwei, drei oder auch mehr Phasen aufweisen. Bei einer Vorladevorrichtung für einen dreiphasigen Stromrichter haben sich einphasige, zweiphasige und dreiphasige Vorladevorrichtungen als besonders vorteilhaft erwiesen. Wenn der dreiphasige Stromrichter zusätzlich noch mit einem N-Leiter des Wechselspannungsnetzes verbunden ist, ist auch eine vierphasige Vorladevorrichtung zur Vorladung sinnvoll anwendbar. Bei einem einphasigen Stromrichter (mit einer Verbindung zu einem N-Leiter des Wechselspannungsnetzes) haben sich einphasige und zweiphasige Vorladevorrichtungen als besonders vorteilhaft erwiesen. Bei einer einphasigen Vorladevorrichtung fließt der Strom in eine Richtung zwischen Wechselspannungsnetz und Stromrichter durch die Vorladevorrichtung. Der Rückstrom in die entgegengesetzte Richtung fließt über eine oder mehrere elektrische Verbindungen zwischen Stromrichter und Wechselspannungsnetz. Der Rückstrom, der betraglich gleich dem Strom ist und in Bezug auf den Strom in entgegengesetzter Richtung fließt, kann sich auf unterschiedliche Phasen aufteilen. In welcher Richtung der Strom und der Rückstrom fließen hängt von der Durchlassrichtung, auch als Polung bezeichnet, des Leistungshalbleiters ab. Dabei hat es sich als besonders vorteilhaft erwiesen, für den Rückstrom eine Phase oder ein N-Leiter vorzusehen und die übrigen Verbindungen der Phasen bzw. N-Leiter zwischen Wechselspannungsnetz und Stromrichter mittels eines Schalters zu unterbrechen. Dabei kann eine Vorladevorrichtung eine oder mehrere Leistungshalbleiter aufweisen. Die Polung der Leistungshalbleiter ist dabei unerheblich. Wichtig für den Betrieb der Vorladevorrichtung ist, dass sich ein Strom zwischen Wechselspannungsnetz und Stromrichter ausbilden kann und gleichzeitig ein Rückstrompfad zwischen Stromrichter und Wechselspannungsnetz, entweder über die elektrische Verbindung zwischen Stromrichter und Wechselspannungsnetz oder über eine weitere Phase der Vorladevorrichtung besteht.

Eine besonders vorteilhafte Ausgestaltung der Erfindung besteht darin, eine vorhandene Vorladeschaltung aus dem Stand der Technik mit zwei oder drei Widerständen dahingehend abzuändern, dass durch den Ersatz eines Widerstandes durch einen Leistungshalbleiter eine Ausgestaltungsform der Vorladevorrichtung kostengünstig und einfach realisiert werden kann. Falls die Vorladeschaltung aus dem Stand Widerstände in unterschiedlichen Phasen aufweist, können diese auch derart in einer Reihenschaltung angeordnet werden, dass sich die Anzahl der Phasen der Vorladevorrichtung verringert.

Als besonders vorteilhaft hat es sich erwiesen, wenn die an der Vorladung beteiligten Phasen des Wechselspannungsnetzes nur einen Strom in eine Richtung führen. Damit wird das Umladen der Kondensatoren des Netzfilters für alle Kondensatoren des Netzfilters zuverlässig vermieden. Bei einer Vorladung, an der zwei Phasen des Wechselspannungsnetzes beteiligt sind oder es sich bei dem Wechselspannungsnetz um ein einphasiges Wechselspannungsnetz mit N-Leiter handelt, kann ein Vorzeichenwechsel im Strom während der Vorladung vermieden werden, wenn die Vorladevorrichtung einen Leistungshalbleiter aufweist. Bei einer Vorladung mittels drei Phasen eines dreiphasigen Wechselspannungsnetzes sind zur Verhinderung eines Vorzeichenwechsels eines Stromes mindestens zwei Leistungshalbleiter erforderlich. Allerdings kann auch eine Vorladung mittels eines dreiphasigen Wechselspannungsnetzes und unter Verwendung eines Leistungshalbleiters erfolgen. In diesem Fall wird der Umladestrom nicht beseitigt, sondern nur reduziert, da ein Kondensator des Netzfilters zumindest teilweise umgeladen werden muss. Es ist aber durch dieses Ausführungsbeispiel eine schnelle Vorladung mit reduzierten Verlusten besonders einfach und kostengünstig realisierbar.

Bei einer vorteilhaften Ausgestaltungsform der Erfindung sind der Widerstand und der Leistungshalbleiter in einer Reihenschaltung angeordnet. Für die Realisierung der Reihenschaltung ist nur eine Vorladevorrichtung mit einer Phase erforderlich. Durch den Leistungshalbleiter wird sichergestellt, dass durch den Widerstand nur Strom in eine Richtung fließt. Mit diesem Strom wird der Zwischenkreiskondensator des Stromrichters aufgeladen. Der Rückstrom fließt nicht durch die Vorladevorrichtung sondern fließt direkt in der elektrischen Verbindung zwischen Stromrichter und Wechselspannungsnetz. Es wird auf einfache Weise sichergestellt, dass für die Ladung nur ein Strom in einer Richtung durch die Vorladevorrichtung verwendet wird. Auch wenn sich Leistungshalbleiter und Widerstand in unterschiedlichen Phasen der Vorladevorrichtung befinden, kann trotzdem von einer Reihenschaltung gesprochen werden, wenn durch die eine Phase der Vorladevorrichtung der ein Strom und durch die andere Phase der Vorladevorrichtung der Rückstrom fließt, wobei die beiden Ströme vom Betrag her gleich sind und sich nur in der Richtung unterscheiden. Dabei gelten Komponente, die vom gleichen Strom durchflossen werden, als in einer Reihenschaltung angeordnet. Mit anderen Worten ausgedrückt, Leistungshalbleiter und Widerstand befinden sich in einer Reihenschaltung angeordnet, wenn durch den Widerstand ein Strom und durch den Leistungshalbeiter der entsprechende Rückstrom mit gleichem Betrag und entgegengesetztem Vorzeichen fließt. Die Richtung von Strom und Rückstrom wird durch die Durchlassrichtung des Leistungshalbleiters festgelegt.

Bei einer weiteren vorteilhaften Ausgestaltungsform weist die Vorladevorrichtung einen ersten Eingang, einen zweiten Eingang, einen ersten Ausgang und einen zweiten Ausgang auf, wobei der erste Eingang und der erste Ausgang der Vorladevorrichtung über den Leistungshalbleiter elektrisch miteinander verbunden sind und der zweite Eingang und der zweite Ausgang der Vorladevorrichtung über den Widerstand elektrisch miteinander verbunden sind. Der Vorteil dieser Ausführungsform liegt im Besonderen darin, dass auf besonders einfache Weise bereits bestehende Vorladeschaltungen mit mehr als einem Widerstand dadurch verbessert werden können, dass ein Widerstand durch einen Leistungshalbleiter ersetzt wird. Je nachdem, wie viel Phasen des Wechselspannungsnetzes für die Vorladung verwendet werden, können hierdurch Umladeströme vermieden oder zumindest deutlich reduziert werden. Auch können für den Aufbau dieses Ausführungsbeispiels bereits aus dem Stand der Technik bekannte Aufbauten als Grundlage für einen Umbau dienen. Es muss lediglich mindestens ein Widerstand durch einen Leistungshalbleiter ersetzt werden.

Bei einer weiteren vorteilhaften Ausgestaltungsform ist der Leistungshalbleiter eine Diode oder ein Thyristor. Eine Diode eignet sich im Besonderen für die Verwendung in der Vorladevorrichtung. Mit einer Diode ist ein Stromfluss in nur einer Richtung auf besonders einfache Weise ohne besondere Maßnahmen für Regelung oder Ansteuerung möglich. Darüber hinaus sind Dioden im erforderlichen Leistungsbereich kostengünstig verfügbar. Mit Hilfe eines Thyristors kann neben der Funktion der Sicherstellung der einen Stromflussrichtung gleichzeitig die Funktion eines Schalters realisiert werden. Damit kann die Vorladevorrichtung über den Zündkontakt des Thyristors zum gewünschten Zeitpunkt eingeschaltet werden. Darüber hinaus besteht die Möglichkeit, beispielsweise über eine Phasenanschnittssteuerung den Strom weiter zu verringern. Dies erlaubt die Verwendung relativ kleiner Widerstandswerte beim Widerstand der Vorladevorrichtung. Im Zusammenspiel mit kleinen Widerständen und durch eine Thyristor-gesteuerten Stromregelung können besonders kurze Vorladezeiten erreicht werden.

Bei einer weiteren vorteilhaften Ausgestaltungsform weist das Stromrichtersystem am wechselspannungsseitigen Anschluss des Stromrichters ein Netzfilter auf. Durch die Vorladevorrichtung werden Ströme durch Kondensatoren eines Netzfilters deutlich reduziert, da Umladungen der Kondensatoren des Netzfilters durch den Einsatz der Vorladevorrichtung beseitigt oder zumindest deutlich reduziert werden. Die Vorladevorrichtung stellt darüber hinaus sicher, dass auch bei der Verwendung eines Netzfilters eine gewünschte Spannung des Zwischenkreiskondensators erreicht werden kann, der Abschluss der Vorladung führt.

Bei einer weiteren vorteilhaften Ausgestaltungsform ist der Stromrichter mittels einer elektrischen Verbindung mit einem Wechselspannungsnetz verbunden, wobei die elektrische Verbindung einen Schalter, insbesondere einen mehrpoligen Schalter aufweist. In diesem Ausführungsbeispiel kann die Vorladung gestartet werden, wenn die elektrische Verbindung zwischen Wechselspannungsnetz und Stromrichter geöffnet ist, so dass der Strom über die Vorladevorrichtung fließt. Nach Abschluss der Vorladung kann durch Schließen des Schalters in der elektrischen Verbindung der Stromrichter schnell für den Normalbetrieb am Wechselspannungsnetz vorbereitet werden. Die Vorladevorrichtung ist dann nicht mehr wirksam. Der Schalter kann weiterhin dazu dienen, den Stromrichter vom Wechselspannungsnetz sicher zu trennen. Falls die Vorladevorrichtung nur mit einer Phase des wechselspannungsseitigen Anschlusses des Stromrichters verbunden ist, muss ein Strom zwischen Stromrichter und Wechselspannungsnetz durch die elektrische Verbindung fließen können. Dafür ist zumindest eine Phase des Stromrichters mit dem Wechselspannungsnetz über den Schalter zu verbinden. Die übrigen Phasen der elektrischen Verbindung bleiben dabei geöffnet, so dass es zu keinen Umladevorgängen am Netzfilter kommt.

Im Folgenden wird die Erfindung anhand der in den Figuren dargestellten Ausführungsbeispiele näher beschrieben und erläutert. Dabei zeigen:
- FIG 1: eine Vorladeschaltung aus dem Stand der Technik und
- FIG 2 bis 6: Ausführungsbeispiele einer Vorladevorrichtung der Erfindung.

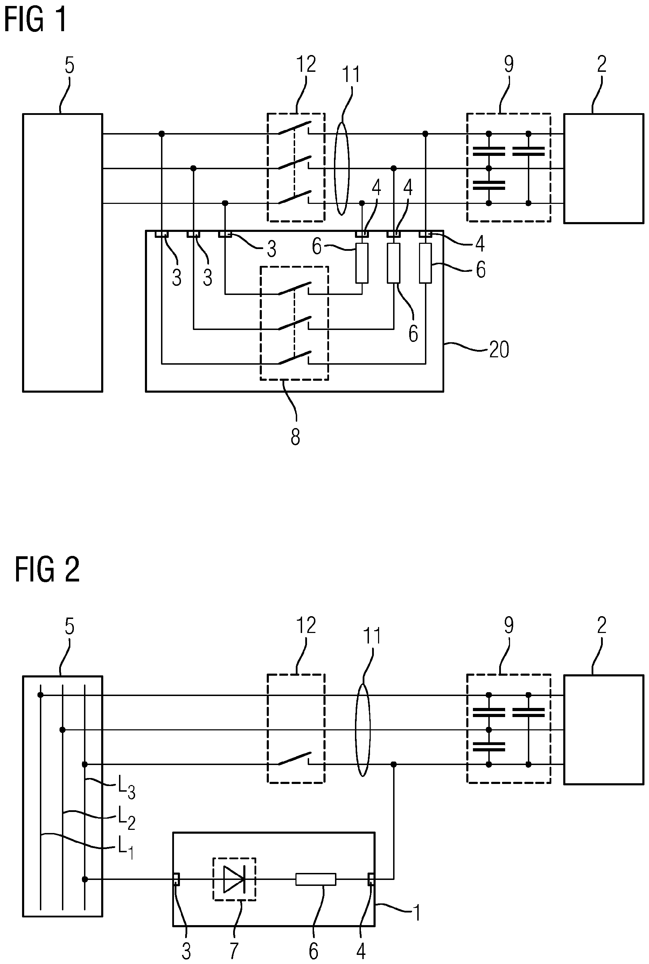

FIG 1 zeigt eine dreiphasige Vorladeschaltung 20 aus dem Stand der Technik. Neben der Vorladeschaltung 20 mit ihren Eingängen 3 und Ausgängen 4 sind in dieser Figur ein Stromrichter 2 dargestellt, der mit einem Wechselspannungsnetz 5 elektrisch verbunden ist. Zwischen Stromrichter 2 und Wechselspannungsnetz 5 sind ein Netzfilter 9 und ein Schalter 12 in einer elektrischen Verbindung zwischen Stromrichter 2 und Wechselspannungsnetz 5 angeordnet. Elektrisch parallel zum Schalter 12 befindet sich die Vorladeschaltung 20. Dabei sind die Eingänge 3 der Vorladeschaltung 20 mit den Phasen des Wechselspannungsnetzes 5 verbunden. Die Ausgänge 4 der Vorladeschaltung 20 sind mit den wechselspannungsseitigen Anschlüsse des Stromrichters 2 verbunden. Zwischen den Verbindungen zu den Ausgängen 4 der Vorladeschaltung 20 und dem Stromrichter 2 ist das Netzfilter 9 angeordnet. Um die Vorladung zu starten, werden bei geöffnetem Schalter 12 der Schalter 8 der Vorladeschaltung 20 geschlossen. Es fließt nun ein Strom zwischen Wechselspannungsnetz 5 über die Widerstände 6 der Vorladeschaltung 20 und Stromrichter 2. Während des Vorladevorgangs wird der hier nicht dargestellte Zwischenkreiskondensator des Stromrichters 2 geladen. Des Weiteren werden Ströme durch die Kondensatoren des Netzfilters 9 erzeugt. Diese Ströme, welche eine Umladung der Kondensatoren des Netzfilters 9 bewirken, werden auch als Umladeströme bezeichnet. Durch das Vorhandensein der Umladeströme verlängert sich der Vorladevorgang, da dieser Stromanteil nicht für die Vorladung des Zwischenkreiskondensators des Stromrichters 2 genutzt werden kann. Durch die Umladeströme kann sich die Situation ergeben, dass der gesamte Ladestrom durch die Vorladeschaltung 20 zum Umladen der Kondensatoren des Netzfilters erforderlich ist. Damit wird der Zwischenkreiskondensator des Stromrichters 2 nicht weiter geladen. Das heißt, dass auch wenn ein stationärer Strom fließt, der Gleichrichtwert der Eingangsspannung im Zwischenkreis nicht erreicht werden kann. Wenn der Zwischenkreiskondensator des Stromrichters 2 einen bestimmten Wert erreicht hat, kann mittels des Schalters 12 die Vorladeschaltung 20 überbrückt werden. Durch Öffnen des Schalters 8 der Vorladeschaltung 20 wird ein Stromfluss über die Vorladeschaltung 20 sicher unterbrochen. Der Stromrichter 2 kann damit in Betrieb an die Spannung des Wechselspannungsnetzes 5 gehen.

FIG 2 zeigt ein erstes Ausführungsbeispiel der Erfindung. Auch bei dieser Anordnung ist ein Stromrichter 2 mit einem Wechselspannungsnetz 5 verbunden. Das Wechselspannungsnetz 5 ist dreiphasig als Drehstromnetz mit den Phasen L1, L2 und L3 ausgebildet. Am wechselspannungsseitigen Anschluss des Stromrichters 2 ist ein Netzfilter 9 angeordnet. In der elektrischen Verbindung 11 zwischen dem Wechselspannungsnetz 5 und dem Stromrichter 2 ist ein Schalter 12 angeordnet. Bei der Vorladevorrichtung 1 handelt es sich um eine einphasige Ausführung. Die Vorladevorrichtung ist mit ihrem Eingang 3 mit einer Phase des Wechselspannungsnetzes 5 verbunden. Der Ausgang 4 der Vorladevorrichtung 1 ist mit einer Phase der elektrischen Verbindung 11 verbunden. Damit ist die Vorladevorrichtung mit einem wechselspannungsseitigen Anschluss des Stromrichters 2 verbunden. Der Eingang 3 der Vorladevorrichtung 1 kann mit einer beliebigen Phase des Wechselspannungsnetzes 5 verbunden sein. Es hat sich als vorteilhaft herausgestellt, dass auch der Ausgang 4 der Vorladevorrichtung 1 mit der gleichen Phase des Wechselspannungsnetzes 5 in Verbindung steht wie der Eingang 3 der Vorladevorrichtung 1. Die Vorladevorrichtung 1 weist eine Reihenschaltung von einer Diode 7 und einem Widerstand 6 auf. Anstelle der Diode 7 kann auch ein Thyristor oder ein beliebig anderer Leistungshalbleiter 7 verwendet werden. Die Diode 7 stellt sicher, dass für die Vorladung nur ein Strom zwischen Wechselspannungsnetz 5 und Stromrichter 2 in eine Richtung fließen kann. Dabei ist es unerheblich in welcher Richtung der Strom fließt. Die Richtung wird durch die Durchlassrichtung der Diode vorgegeben. Mit anderen Worten kann auch die Diode in umgekehrter Richtung angeordnet werden. Der Schalter 12 oder ein anderer im Wechselspannungsnetz 5 angeordneter Schalter muss mindestens zwei Phasen der elektrischen Verbindung 11 trennen. Dabei muss zumindest die Phase, über die die Vorladung mittels der Vorladevorrichtung 1 erfolgt, durch den Schalter 12 in der elektrischen Verbindung 11 unterbrochen sein. In diesem Beispiel ist es die Phase L3. Wie oben erwähnt, muss zusätzlich noch eine der Verbindungen zur Phase L1 oder zur Phase L2 durch den Schalter 12 oder einen im Wechselspannungsnetz 5 angeordneten zusätzlichen Schalter unterbrochen werden, um einen Stromfluss mit hohen Strömen zwischen den Phasen L1 und L2 des Wechselspannungsnetzes 5 und dem Stromrichter durch die elektrische Verbindung 11 zu verhindern. Der Übersichtlichkeit halber ist dieser zusätzliche Schalter nicht dargestellt. In der dargestellten Ausführungsform fließt während der Vorladung nun von der Phase L3 des Wechselspannungsnetzes 5 ein Strom über die Vorladevorrichtung 1 zum Stromrichter 2. Dieser lädt den Zwischenkreiskondensator des Stromrichters 2 auf. Der Rückstrom zum Wechselspannungsnetz 5 erfolgt über die elektrische Verbindung 11 über die Phasen L1 oder L2, je nachdem welche Verbindung mittels eines Schalters unterbrochen ist. Da der Strom nur in eine Richtung fließt, d.h. kein Vorzeichenwechsel aufweist, werden die Kondensatoren des Netzfilters 9 nicht umgeladen sondern nur aufgeladen. Dadurch kann die Vorladung schnell und verlustarm erfolgen. Darüber hinaus kann in dem Strompfad über die Vorladevorrichtung ein zusätzlicher Schalter eingebracht werden, mit dem die Vorladung gezielt gestartet oder beendet werden kann.

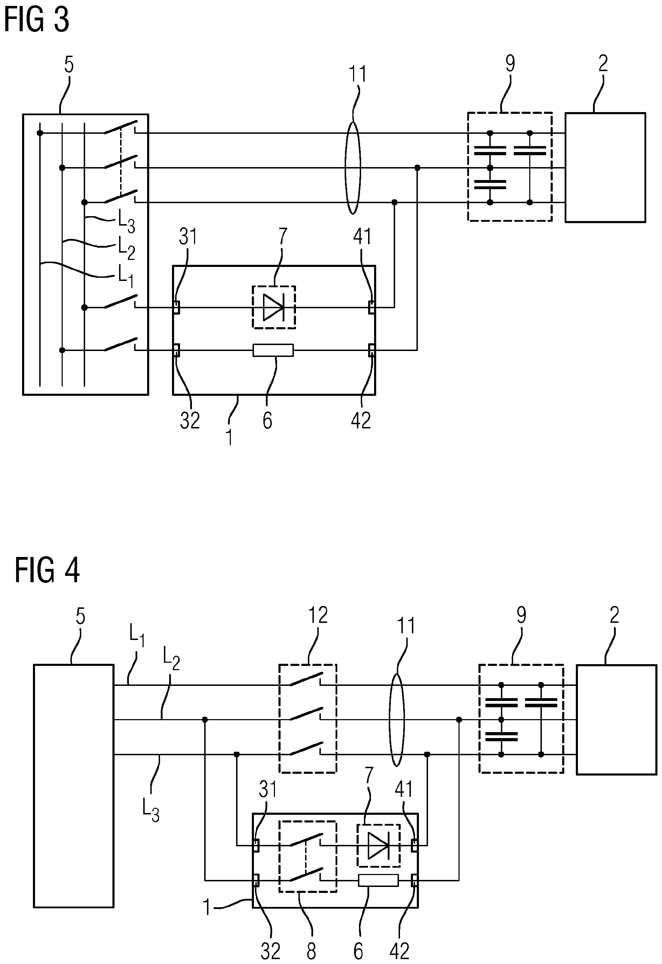

FIG 3 zeigt ein weiteres Ausführungsbeispiel der Erfindung. Zur Vermeidung von Wiederholungen wird auf die Beschreibung zu den Figuren 1 und 2 sowie auf die dort eingeführten Bezugszeichen verwiesen. Die Vorladevorrichtung 1 ist in diesem Ausführungsbeispiel zweiphasig ausgeführt. Ein erster Eingang 31 der Vorladevorrichtung 1 ist mit einer Phase des Wechselspannungsnetzes 5 verbunden. Der zweite Eingang 32 der Vorladevorrichtung 1 ist mit einer anderen Phase des Wechselspannungsnetzes 5 verbunden. Während der Vorladung ist die elektrische Verbindung 11 zwischen Stromrichter 2 und Wechselspannungsnetz 5 getrennt. Die dafür erforderlichen Schalter sind in diesem Ausführungsbeispiel im Wechselspannungsnetz 5 angeordnet. Sie können aber auch in der elektrischen Verbindung 11 zwischen Wechselspannungsnetz 5 und Stromrichter 2 angeordnet sein. Da in diesem Ausführungsbeispiel sowohl der Strom als auch der Rückstrom über die Vorladevorrichtung 1 fließen, können die drei Phasen in der elektrischen Verbindung 11 zwischen Stromrichter 2 und Wechselspannungsnetz 5 getrennt sein. Auch in diesem Ausführungsbeispiel weist die Vorladevorrichtung 1 eine Diode 7 und einen Widerstand 6 auf. Die Diode 7 kann auch in diesem Ausführungsbeispiel durch einen Thyristor oder einem Leistungshalbleiter 7 ersetzt werden. Da während der Vorladung die Diode 7 und der Widerstand 6 vom gleichen Strom durchflossen sind, stellen auch diese eine Reihenschaltung dar. Sobald die Schalter zwischen den Eingängen der Vorladevorrichtung 1 und den Phasen des Wechselspannungsnetzes 5 geschlossen sind, erfolgt die Vorladung und der Zwischenkreiskondensator des Stromrichters 2 wird geladen. Gleichzeitig werden die Kondensatoren des Netzfilters 9 ebenfalls aufgeladen. Durch den Stromfluss in nur einer Richtung erfolgt keine Umladung eines der Kondensatoren des Netzfilters 9. Dieses Ausführungsbeispiel eignet sich im Besonderen dafür, eine bestehende Vorladeschaltung aus dem Stand der Technik, welche zwei oder drei Phasen aufweist, die jeweils einen Widerstand aufweisen, derart zu verändern, dass sie zu einem Ausführungsbeispiel der Erfindung wird. Dazu ist einer der Widerstände durch die Diode 7 zu ersetzen. Bei einer dreiphasigen Vorladeschaltung sind darüber hinaus die verbleibenden Widerstände in einer Reihenschaltung anzuordnen. Führt man dieses durch, so gelangt man zum Ausführungsbeispiel der FIG 3.

FIG 4 zeigt ein weiteres Ausführungsbeispiel der Erfindung, wobei die Vorladevorrichtung 1 einen Schalter 8 der Vorladevorrichtung 1 aufweist. Zur Vermeidung von Wiederholungen wird auf die Beschreibung zu den Figuren 1 bis 3 sowie auf die dort eingeführten Bezugszeichen verwiesen. In diesem Ausführungsbeispiel wird die elektrische Verbindung zwischen Stromrichter 2 und Wechselspannungsnetz 5 durch einen Schalter 12 in der elektrischen Verbindung 11 unterbrochen. Die Vorladung erfolgt dann, wenn der Schalter 12 geöffnet ist. Auch ist der Schalter zur Verbindung der Vorladevorrichtung 1 mit den Phasen des Wechselspannungsnetzes 5 als Schalter 8 der Vorladevorrichtung 1 in der Vorladevorrichtung 1 angeordnet.

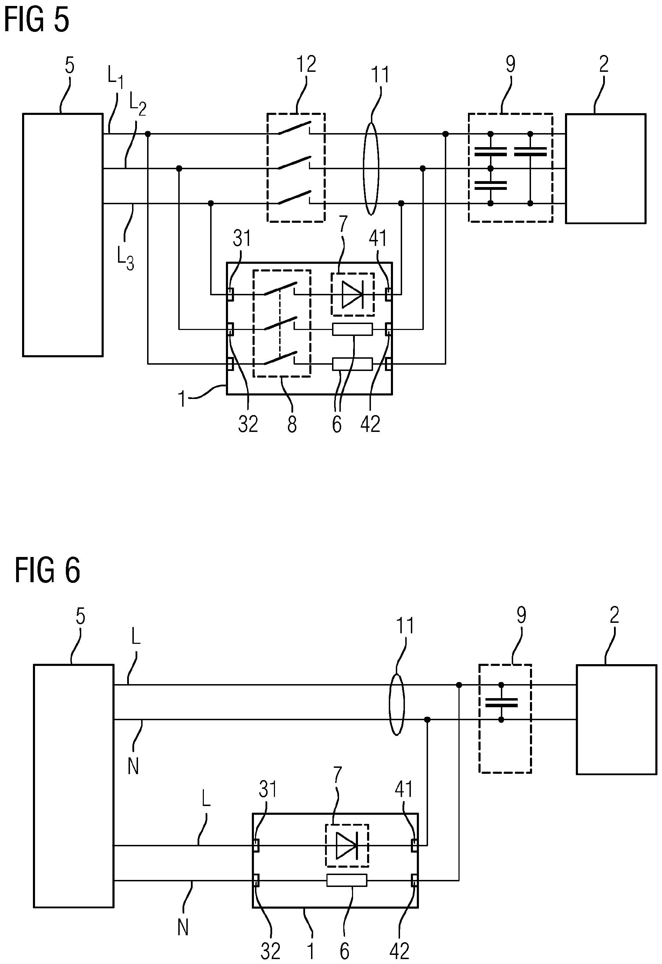

FIG 5 zeigt ein weiteres Ausführungsbeispiel der Erfindung, wobei die Vorladevorrichtung 1 dreiphasig ausgebildet ist. Diese Vorladevorrichtung 1 lässt sich dadurch realisieren, dass bei einer aus dem Stand der Technik bekannten Vorladeschaltung ein Widerstand 6 durch eine Diode 7 ersetzt wird. Zur Vermeidung von Wiederholungen wird auf die Beschreibung zu den Figuren 1 bis 4 sowie auf die dort eingeführten Bezugszeichen verwiesen. Mit dieser Vorladevorrichtung 1 wird der Zwischenkreiskondensator des Stromrichters 2 über die drei Phasen L1, L2 und L3 vorgeladen. Durch die Diode 7, die im Strompfad von L3 angeordnet ist, kann der Strom nur in eine Richtung fließen. Auch hier kann die Diode 7 in umgekehrter Durchlassrichtung angeordnet sein. Die Diode bewirkt, dass zwei Kondensatoren des Netzfilters nicht umgeladen werden müssen. Damit reduziert sich der Umladestrom, so dass ein höherer Stromanteil für die Aufladung des Zwischenkreiskondensators des Stromrichters 2 zur Verfügung steht. Die bei der Vorladung entstehenden Verluste in der Vorladevorrichtung 1 entstehen in diesem Ausführungsbeispiel in zwei Widerständen 6. Ersetzt man einen der Widerstände 6 durch eine weitere Diode 7, die vorzugsweise in gleicher Richtung gepolt ist wie die bereits vorhandene Diode 7, so kann ein Umladen aller Zwischenkreiskondensatoren des Netzfilters 9 vermieden werden. Allerdings entstehen die elektrischen Verluste, die bei der Vorladung des Zwischenkreiskondensators des Stromrichters 2 entstehen, dann nur in einem Widerstand, der entsprechend auf diese höhere thermische Belastung ausgelegt sein muss.

FIG 6 zeigt ein weiteres Ausführungsbeispiel der Erfindung. Zur Vermeidung von Wiederholungen wird auf die Beschreibung zu den Figuren 1 bis 5 sowie auf die dort eingeführten Bezugszeichen verwiesen. Bei diesem Stromrichter 2 handelt es sich um einen einphasigen Stromrichter, der mit einer Phase L und einem N-Leiter eines Wechselspannungsnetzes 5 verbunden ist. In diesem Fall hat es sich als sinnvoll erwiesen, auch die Vorladevorrichtung zweiphasig auszubilden. Dabei ist in einer Phase der Vorladevorrichtung 1 eine Diode und in der anderen Phase in Widerstand 6 angeordnet. Aus Gründen der Übersichtlichkeit wurde auf die Darstellung von Schaltern verzichtet.

Obwohl die Erfindung im Detail durch die bevorzugten Ausführungsbeispiele näher illustriert und beschrieben wurde, ist die Erfindung nicht alleine auf die offenbarten Beispiele beschränkt und andere Variationen können vom Fachmann hieraus abgeleitet werden, ohne den Schutzumfang der Erfindung zu verlassen, wie er in den beigefügten Patentansprüchen festgelegt ist.

## Patentansprüche

1. Stromrichtersystem (10), aufweisend einen Stromrichter (2) und eine Vorladevorrichtung (1), wobei die Vorladevorrichtung (1) mindestens einen Eingang (3,31,32) und mindestens einen Ausgang (4,41,42) aufweist, wobei der Eingang (3,31,32) der Vorladevorrichtung (1) mit einem Wechselspannungsnetz (5) verbindbar ist, wobei der Ausgang (4,41,42) der Vorladevorrichtung (1) mit dem Stromrichter (2) verbunden ist, wobei die Vorladevorrichtung (1) mindestens einen Widerstand (6) und einen Leistungshalbleiter (7) aufweist, wobei der mindestens eine Ausgang (4,41,42) der Vorladevorrichtung mit einem wechselspannungsseitigen Anschluss des Stromrichters (2) elektrisch verbunden ist, wobei das Stromrichtersystem am wechselspannungsseitigen Anschluss des Stromrichters (2) ein Netzfilter (9) aufweist, wobei der Leistungshalbleiter (7) derart angeordnet ist, dass durch den Leistungshalbleiter (7) in einer Phase nur ein Stromfluss zwischen Wechselspannungsnetz (5) und Stromrichter (2) in einer Richtung erfolgt.

2. Stromrichtersystem nach Anspruch 1, wobei der Leistungshalbleiter (7) derart angeordnet ist, dass die an der Vorladung beteiligten Phasen des Wechselspannungsnetzes (5) nur einen Strom in einer Richtung führen.

3. Stromrichtersystem nach einem der Ansprüche 1 oder 2, wobei der Widerstand (6) und der Leistungshalbleiter (7) in einer Reihenschaltung angeordnet sind.

4. Stromrichtersystem nach einem der Ansprüche 1 bis 3, wobei die Vorladevorrichtung (1) einen ersten Eingang (31), einen zweiten Eingang (32), einen ersten Ausgang (41) und einen zweiten Ausgang (42) aufweist, wobei der erste Eingang (31) und der erste Ausgang (41) der Vorladevorrichtung (1) über den Leistungshalbleiter (7) elektrisch miteinander verbunden sind und der zweite Eingang (32) und der zweite Ausgang (42) der Vorladevorrichtung (1) über den Widerstand (6) elektrisch miteinander verbunden sind.

5. Stromrichtersystem nach einem der Ansprüche 1 bis 4, wobei der Leistungshalbleiter (7) eine Diode oder ein Thyristor ist.

6. Stromrichtersystem (10) nach einem der Ansprüche 1 bis 5, wobei der Stromrichter (2) mittels einer elektrischen Verbindung (11) mit einem Wechselspannungsnetz (5) verbunden ist, wobei die elektrische Verbindung (11) einen Schalter (12), insbesondere einen mehrpoligen Schalter (12), aufweist.

7. Verfahren zum Vorladen eines Stromrichters (2) eines Stromrichtersystems nach einem der Ansprüche 1 bis 6, wobei nur eine Polarität mindestens einer Spannung eines mit dem Stromrichter (2) wechselspannungsseitig verbundenen Wechselspannungsnetzes (5) für die Vorladung des Stromrichters (2) genutzt wird.

## Claims

1. Current converter system (10), having a current converter (2) and a pre-charging device (1), wherein the pre-charging device (1) has at least one input (3,31,32) and at least one output (4,41,42), wherein the input (3,31,32) of the pre-charging device (1) can be connected to an alternating voltage network (5), wherein the output (4,41,42) of the pre-charging device (1) is connected to the current converter (2), wherein the pre-charging device (1) has at least one resistor (6) and a power semiconductor (7), wherein the at least one output (4,41,42) of the pre-charging device is electrically connected to an AC-side connection of the current converter (2), wherein the current converter system at the AC-side connection of the current converter (2) has a network filter (9), wherein the power semiconductor (7) is arranged such that in one phase, only a current flow between alternating voltage network (5) and current converter (2) in one direction takes place through the power semiconductor (7).

2. Current converter system according to claim 1, wherein the power semiconductor (7) is arranged such that the phases of the alternating voltage network (5) involved in the pre-charging only guide a current in one direction.

3. Current converter system according to one of claims 1 or 2, wherein the resistor (6) and the power semiconductor (7) are arranged in a series connection.

4. Current converter system according to one of claims 1 to 3, wherein the pre-charging device (1) has a first input (31), a second input (32), a first output (41) and a second output (42), wherein the first input (31) and the first output (41) of the pre-charging device (1) are electrically interconnected via the power semiconductor (7) and the second input (32) and the second output (42) of the pre-charging device (1) are electrically interconnected via the resistor (6).

5. Current converter system according to one of claims 1 to 4, wherein the power semiconductor (7) is a diode or a thyristor.

6. Current converter system (10) according to one of claims 1 to 5, wherein the current converter (2) is connected to an alternating voltage network (5) by means of an electrical connection (11), wherein the electrical connection (11) has a switch (12), in particular a multipole switch (12).

7. Method for pre-charging a current converter (2) of a current converter system according to one of claims 1 to 6, wherein only one polarity of at least one voltage of an alternating voltage network (5) connected to the current converter (2) on the AC side is used for the pre-charging of the current converter (2).

## Revendications

1. Système (10) de convertisseur comportant un convertisseur (2) et un dispositif (1) de précharge, le dispositif (1) de précharge ayant au moins une entrée (3, 31, 32) et au moins une sortie (4, 41, 42), l'entrée (3, 31, 32) du dispositif (1) de précharge pouvant être reliée à un réseau (5) de tension alternative, la sortie (4, 41, 42) du dispositif (1) de précharge étant reliée au convertisseur (2), le dispositif (1) de précharge ayant au moins une résistance (6) et un semi-conducteur (7) de puissance, la au moins une sortie (4, 41, 42) du dispositif de précharge étant reliée électriquement à une borne, du côté de la tension alternative, du convertisseur (2), le système de convertisseur ayant un filtre (9) de réseau à la borne, du côté de la tension alternative, du convertisseur (2), le semi-conducteur (7) de puissance étant monté de manière à produire, par le semi-conducteur (7) de puissance dans une phase, seulement un flux de courant dans un sens entre le réseau (5) de tension alternative et le convertisseur (2).

2. Système de convertisseur suivant la revendication 1, dans lequel le semi-conducteur (7) de puissance est monté de manière à ce que les phases participant à la précharge du réseau (5) de tension alternative ne conduisent un courant que dans un sens.

3. Système de convertisseur suivant la revendication 1 ou 2, dans lequel la résistance (6) et le semi-conducteur (7) de puissance sont montés suivant un circuit en série.

4. Système de convertisseur suivant l'une des revendications 1 à 3, dans lequel le dispositif (1) de précharge a une première entrée (31), une deuxième entrée (32), une première sortie (41) et une deuxième sortie (42), la première entrée (31) et la première sortie (41) du dispositif (1) de précharge étant reliées électriquement entre elles par l'intermédiaire du semi-conducteur (7) de puissance et la deuxième entrée (32) et la deuxième sortie (42) du dispositif (1) de précharge étant reliées entre elles électriquement par la résistance (6).

5. Système de convertisseur suivant l'une des revendications 1 à 4, dans lequel le semi-conducteur (7) de puissance est une diode ou un thyristor.

6. Système de convertisseur suivant l'une des revendications 1 à 5, dans lequel le convertisseur (2) est relié à un réseau (5) de tension alternative au moyen d'une liaison (11) électrique, la liaison (11) électrique ayant un interrupteur (12), notamment un interrupteur (12) multipolaire.

7. Procédé de chargement d'un convertisseur (2) d'un système de convertisseur suivant l'une des revendications 1 à 6, dans lequel n'on utilise, pour la précharge du convertisseur (2), qu'une polarité d'au moins une tension d'un réseau (5) de tension alternative reliée du côté de la tension alternative au convertisseur (2).
